# EUROPEAN PATENT APPLICATION

(11) **EP 3 902 083 A1**
(43) Date of publication of application: **27.10.2021**
(21) Application number: 19898418.9
(22) Date of filing: 18.10.2019
(51) Int. Cl.: H02J 3/14, B60L 15/40, B60M 7/00, H02J 3/38, H02J 13/00, B60L 55/00

(54) **POWER SUPPLY AND DEMAND ADJUSTMENT SYSTEM AND VEHICLE-MOUNTED DEVICE**

(30) Priority: 21.12.2018 JP 2018239059
(71) Applicant: Hitachi, Ltd., Tokyo 100-8280 (JP)
(72) Inventor: KATSUTA, Keiichi, Tokyo 100-8280 (JP); MIYAUCHI, Tsutomu, Tokyo 100-8280 (JP)
(74) Representative: Mewburn Ellis LLP
(86) International application number: PCT/JP2019/041161
(87) International publication number: WO 2020/129389

(57) **Abstract**

When a renewable energy power generation system is connected to a power system, it is necessary to provide a storage device that has a storage capacity sufficient for preventing the output fluctuation of the renewable energy power generation system, and the installation of such a storage device requires a high cost. In order to solve this problem, the invention provides a power supply and demand adjustment system configured to adjust a power supply and demand balance of a power system connected with a renewable energy power generation system. The power supply and demand adjustment system includes an operation management device configured to transmit vehicle control information to a vehicle traveling on a route connected to the power system.

## Description

### Technical Field

The present invention relates to a power supply and demand adjustment system that responds to an output fluctuation of a renewable energy power generation system.

### Background Art

In recent years, as one of measures against global warming, renewable energy power generation systems such as solar power and wind power have been actively introduced. Such a power generation system greatly affects a supply and demand balance of a power system of a connection destination since an output fluctuates greatly depending on weather conditions. Therefore, the renewable energy power generation system is generally required to be provided with a storage device for appropriately preventing an output fluctuation. For example, PTL 1 discloses a technique for reducing a required storage capacity by controlling power generation based on a predicted value of weather information and a charging rate of the storage device.

### Citation list

### Patent Literature

PTL 1: JP-A-2017-93051

### Summary of Invention

### Technical Problem

When a renewable energy power generation system is connected to a power system, it is necessary to provide a storage device that has a storage capacity sufficient for preventing the output fluctuation of the renewable energy power generation system, and the installation of such a storage device requires a high cost.

### Solution to Problem

In order to solve the above-mentioned problem, one of representative power supply and demand adjustment systems according to the invention is a power supply and demand adjustment system configured to adjust a power supply and demand balance of a power system connected with a renewable energy power generation system. The power supply and demand adjustment system includes an operation management device configured to transmit vehicle control information to a vehicle traveling on a route connected to the power system. Other aspects of the invention will be described in the following embodiments.

### Advantageous Effect

According to the above-mentioned configuration, a storage capacity of a storage device for preventing an output fluctuation of the renewable energy power generation system can be reduced, and the cost of such a storage device can be reduced. Problems, configurations and effects other than those described above will become apparent based on the following description of the embodiments.

### Brief Description of Drawings

[FIG. 1] FIG. 1 is a diagram showing a configuration example of a power supply and demand adjustment system according to a first embodiment.
[FIG. 2] FIG. 2 is a diagram showing a configuration example of a power supply and demand adjustment system according to a second embodiment.
[FIG. 3] FIG. 3 is a diagram showing a configuration example of a power supply and demand adjustment system according to a third embodiment.
[FIG. 4] FIG. 4 is a diagram showing a configuration example of a power supply and demand adjustment system according to a fourth embodiment.
[FIG. 5] FIG. 5 is a diagram showing a configuration example of a power supply and demand adjustment system according to a fifth embodiment.

### Description of Embodiments

In order to adjust a power supply and demand balance of a power system connected with a renewable energy power generation system, a power supply and demand adjustment system according to an embodiment of the invention includes an operation management device that transmits vehicle control information to a vehicle traveling on a route connected to the power system and a vehicle-mounted device that controls a drive device of the vehicle based on the vehicle control information. Hereinafter, an embodiment will be described with reference to the drawings using examples in which a road provided with a power supply overhead wire as the route, a trolley-type electric vehicle provided with a current collecting device as the vehicle, and a vehicle-mounted device that controls the drive device of the trolley-type electric vehicle based on the vehicle control information are used.

### [First Embodiment]

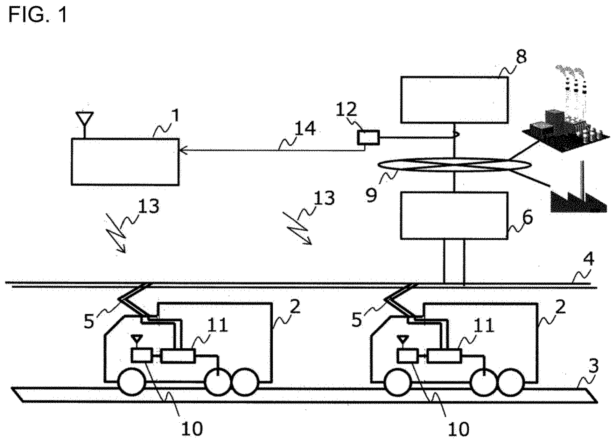

FIG. 1 shows a configuration example of a power supply and demand adjustment system according to a first embodiment. A trolley-type electric vehicle 2 travels on a road 3 provided with a power supply overhead wire 4 to transport people and cargo. An operation management device 1 transmits vehicle control information 13 to a vehicle-mounted device 10 of the trolley-type electric vehicle 2 using a mechanism to be described later.

The trolley-type electric vehicle 2 is equipped with the vehicle-mounted device 10 provided with a communication unit with the operation management device 1, a current collecting device 5, and a drive device 11. A method regarding the communication unit with the operation management device 1 is not particularly limited. A dedicated wireless system may be prepared, or a telephone line communication using a mobile phone, a satellite communication using an artificial satellite, or the like may be used. When the trolley-type electric vehicle 2 travels on the road 3, the vehicle-mounted device 10 is connected to the operation management device 1 via the communication unit. In the operation management device 1, connection information is stored in an internal storage device.

The drive device 11 of the trolley-type electric vehicle 2 receives power supplied from a power system 9 via a power supply device 6 and the power supply overhead wire 4 by the current collecting device 5, and controls acceleration and deceleration of the trolley-type electric vehicle 2 using the power as motive power based on an acceleration and deceleration operation performed by a driver, the vehicle control information 13 transmitted from the operation management device 1, and a limit value of power consumption received from the vehicle-mounted device 10.

The power system 9 is an infrastructure that supplies power produced in a power plant such as a thermal power plant, a nuclear power plant, or a hydroelectric power plant to a consumer such as a factory or a general household after stabilizing a voltage or a frequency. In the present embodiment, the power supply device 6 that supplies the power to the drive device 11 of the trolley-type electric vehicle 2 via the power supply overhead wire 4 on the road 3 and a renewable energy power generation system 8 are connected to the power system 9.

The renewable energy power generation system 8 connected to the power system 9 is provided with a power meter 12 provided with the communication unit with the operation management device 1. The power meter 12 reports generated power 14 of the renewable energy power generation system 8 to the operation management device 1 via the communication unit. A general telephone line communication may be used as the communication unit, and the method is not particularly limited. The operation management device 1 stores the generated power 14 reported from the power meter 12 in the internal storage device.

Next, the vehicle control information 13 for the trolley-type electric vehicle 2 traveling on the road 3, which is created by the operation management device 1, will be described. First, when the generated power of the renewable energy power generation system 8 is relatively small with respect to a power supply and demand in the power system 9, specifically, when the generated power is small enough not to affect the stability of the voltage or the frequency of the power system 9, the operation management device 1 creates the vehicle control information 13 of a content for limiting the power consumption of the trolley-type electric vehicle 2 so that the power consumption of the trolley-type electric vehicle 2 on the road 3 does not exceed a predetermined value and transmits the vehicle control information 13 to the vehicle-mounted device 10 of the trolley-type electric vehicle 2.

Generally, a power consumer uses the power in a manner of not exceeding predetermined power. The transport system according to the present embodiment also does not use unlimited power. For example, when 1000 trolley-type electric vehicles travel at a predetermined power of 100,000 kW, the vehicle control information of the content for limiting the power consumption to 100 kW is transmitted to each trolley-type electric vehicle.

The vehicle control information may be a limit value of a power consumption amount per predetermined time instead of the limit value of the power consumption for each trolley-type electric vehicle. Instead of the limit value, the vehicle control information may be referred to as a power value or the power amount that the power system can supply to each trolley-type electric vehicle.

Then, when the generated power of the renewable energy power generation system 8 is no longer relatively small with respect to the power supply and demand in the power system 9, specifically, when the generated power increases to such a degree as to affect the stability of the voltage or the frequency of the power system 9, the operation management device 1 creates the vehicle control information 13 of relaxing the limit of the power consumption of the trolley-type electric vehicle 2 and transmits the vehicle control information 13 to the vehicle-mounted device 10 of the trolley-type electric vehicle 2.

For example, when the generated power of the renewable energy power generation system 8 increases to 10,000 kW in a situation in which the operation management device 1 issues an instruction to limit the power consumption to 100 kW to 1000 trolley electric vehicles, the operation management device 1 transmits the vehicle control information 13 of a content for relaxing the power consumption to 110 kW to the 1000 trolley-type electric vehicles. Alternatively, the limit of the power consumption is relaxed corresponding to the generated power, for example, vehicle control information of a content for relaxing the power consumption to 120 kW is transmitted to 500 trolley-type electric vehicles or the vehicle control information 13 of a content for relaxing the power consumption to 150 kW is transmitted to 200 trolley-type electric vehicles. The vehicle-mounted device 10 that has received such vehicle control information 13 outputs the limit value of the power consumption that has been newly received to the drive device 11. The drive device 11 controls the acceleration and deceleration of the vehicle within the limited power range.

Thereafter, until the generated power of the renewable energy power generation system 8 becomes relatively small with respect to the power supply and demand in the power system 9, specifically, until the generated power becomes small enough not to affect the stability of the voltage or the frequency of the power system 9, the operation management device 1 changes the limit of the power consumption of each trolley-type electric vehicle traveling on the road 3 in accordance with a fluctuation of the generated power of the renewable energy power generation system 8. That is, when the generated power 14 of the renewable energy power generation system 8 increases from a previously reported value, the operation management device 1 creates the vehicle control information 13 of the content for relaxing the limit of the power consumption of the trolley-type electric vehicle 2 traveling on the road 3 and transmits the vehicle control information 13 to the vehicle-mounted device 10 of the trolley-type electric vehicle 2.

For example, when the generated power 14 of the renewable energy power generation system 8 increases by 15,000 kW from the previously reported value in a situation in which the operation management device 1 issues an instruction to limit the power consumption to 110 kW to 1000 trolley electric vehicles, the operation management device 1 transmits the vehicle control information 13 of a content for relaxing the limit of the power consumption to 125 kW to the 1000 trolley-type electric vehicles. Alternatively, the limit of the power consumption is relaxed corresponding to increase of the generated power, for example, vehicle control information of a content for relaxing the limit of the power consumption to 140 kW is transmitted to 500 trolley-type electric vehicles or the vehicle control information 13 of a content for relaxing the limit of the power consumption to 160 kW is transmitted to 300 trolley-type electric vehicles. The vehicle-mounted device 10 that has received such vehicle control information 13 outputs the limit value of the power consumption that has been newly received to the drive device 11. The drive device 11 controls the acceleration and deceleration of the vehicle within the limited power range.

Conversely, when the generated power 14 of the renewable energy power generation system 8 decreases below the previously reported value, the operation management device 1 creates the vehicle control information 13 of a content for enhancing the limit of the power consumption of the trolley-type electric vehicle 2 traveling on the road 3 and transmits the vehicle control information 13 to the vehicle-mounted device 10 of the trolley-type electric vehicle 2.

For example, when the generated power 14 of the renewable energy power generation system 8 decreases by 10,000 kW from the previously reported value in a situation in which the operation management device 1 issues an instruction to limit the power consumption to 125 kW to 1000 trolley electric vehicles, the operation management device 1 transmits the vehicle control information 13 of a content for enhancing the limit of the power consumption to 115 kW to the 1000 trolley-type electric vehicles. Alternatively, the limit of the power consumption is enhanced corresponding to decrease of the generated power, for example, the vehicle control information 13 of a content for enhancing the limit of the power consumption to 105 kW is transmitted to 500 trolley-type electric vehicles or the vehicle control information 13 of a content for setting the power consumption to 0 kW is transmitted to 80 trolley-type electric vehicles. The vehicle-mounted device 10 that has received such vehicle control information 13 outputs the limit value of the power consumption that has been newly received to the drive device 11. The drive device 11 controls the acceleration and deceleration of the vehicle within the limited power range.

Transmitting the vehicle control information of the content for setting the power consumption to 0 kW is synonymous with stopping the vehicle in a roadside zone if the vehicle is traveling and preventing the start of the vehicle if the vehicle is to start traveling, which shows that the operation management device described in the present embodiment can control not only a speed of vehicles traveling on the road but also the number of vehicles based on the generated power of the renewable energy power generation system. Transmitting the limit value of the power consumption is also for controlling the number of vehicles entering or exiting from a management target of the operation management device. For example, when a power supply overhead wire is provided only in a desired lane and the vehicle is also provided with a device for traveling without depending on a continuous power supply from the overhead wire such as an engine or a storage device, by transmitting the limit value of power consumption to the vehicle, it is possible to control traffic with a lane having no overhead wire or control whether a current collecting device is brought into contact with the power supply overhead wire.

That is, according to the present embodiment, the operation management device 1 grasps the generated power 14 of the renewable energy power generation system 8, and changes the power consumption of the trolley-type electric vehicle 2 traveling on the road 3 in accordance with the fluctuation of the generated power of the renewable energy power generation system 8 by creating the vehicle control information 13 for enhancing or relaxing the limit of the power consumption of the trolley-type electric vehicle 2 traveling on the road 3 provided with the power supply overhead wire 4 corresponding to change in the generated power 14 and by transmitting the vehicle control information 13 to the vehicle-mounted device 10. According to this mechanism, when the generated power of the renewable energy power generation system 8 fluctuates due to weather conditions or the like, it is possible to prevent an influence on the stability of the voltage or the frequency of the power system 9 that is a connection destination. Therefore, when the renewable energy power generation system 8 is connected to the power system 9, the storage capacity of the storage device required to prevent an output fluctuation can be reduced, and a system cost can be reduced.

As described above, in the present embodiment, the change in the generated power of renewable energy that adversely affects the stability of the power system in the related art is prevented by changing the speed of the trolley-type electric vehicle traveling on the road provided with the power supply overhead wire, and the present embodiment contributes to the promotion of utilization of the renewable energy.

As a substitute for the method described in the present embodiment, it is conceivable to use a method of adjusting the power consumption amount of each train when the train travels between stations to control a total power consumption amount of a train group to a regulation value or smaller over a certain period of time by finely instructing a travel speed for each train that repeats stopping at stations and traveling between stations when the train travels between the stations. However, a high-performance computer is required to calculate a travel pattern in which a power consumption amount is reduced for each train, and in particular, it is extremely difficult to instantaneously increase or decrease the power consumption of the train that consumes much when departing from the station in accordance with the generated power of the renewable energy power generation system that fluctuates over an extremely short period of time as compared with a travel time between stations.

On the other hand, the method described in the present embodiment is useful in that it is possible to instantaneously increase or decrease the power consumption of the vehicle group because the method changes the limit value of the power consumption of the vehicle that continuously travels on the road such as a national expressway or a motor highway for a certain long time, in other words, continuously consumes the power for a certain long time.

### [Second Embodiment]

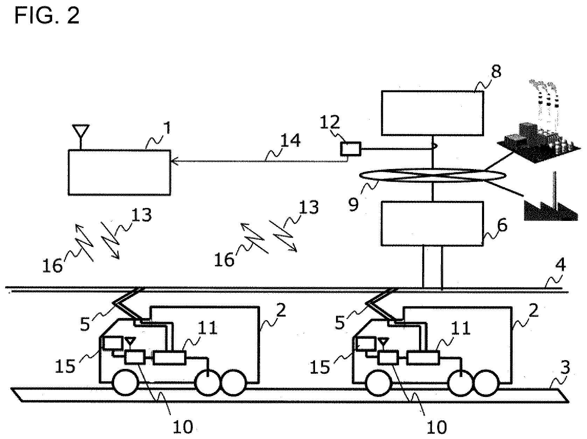

A second embodiment describes a method in which a vehicle-mounted device of a trolley-type electric vehicle reports information of a position of the trolley-type electric vehicle to an operation management device, and the operation management device calculates an inter-vehicle distance between the trolley-type electric vehicles based on the information and creates vehicle control information in consideration of the inter-vehicle distance. FIG. 2 shows a configuration example of a power supply and demand adjustment system according to the second embodiment. A difference from the first embodiment is that the vehicle-mounted device 10 of the trolley-type electric vehicle 2 is provided with a position recognition device 15 that measures a current position of the trolley-type electric vehicle 2 and reports position information 16 of the trolley-type electric vehicle 2 to the operation management device 1. The method of measuring the position is not limited. A satellite positioning system may be used, or a travel distance from a certain reference point on the road 3 may be calculated based on the number of rotations of a wheel and a wheel diameter.

The same mechanism as that according to the first embodiment is used for the mechanism in which, the operation management device 1 grasps the generated power 14 of the renewable energy power generation system 8, and changes power consumption of the trolley-type electric vehicle 2 traveling on the road 3 in accordance with a fluctuation of the generated power of the renewable energy power generation system 8 by creating the vehicle control information 13 for enhancing or relaxing limit of the power consumption of the trolley-type electric vehicle 2 traveling on the road 3 provided with the power supply overhead wire 4 corresponding to change in the generated power and by transmitting the vehicle control information 13 to the vehicle-mounted device 10.

A difference from the first embodiment is that, when the vehicle control information 13 is created, the position information 16 of the trolley-type electric vehicle 2 reported from the vehicle-mounted device 10 is used. Specifically, the distance between the trolley-type electric vehicles is calculated based on the position information 16 reported from the vehicle-mounted device 10 of each trolley-type electric vehicle 2, and a limit value of the power consumption of each trolley electric vehicle 2 is determined according to an inter-vehicle distance between the trolley-type electric vehicle 2 and a preceding vehicle and an inter-vehicle distance between the trolley-type electric vehicle 2 and a succeeding vehicle. The method of calculating the inter-vehicle distance is not limited. The inter-vehicle distance may be calculated based on latitude and longitude information and a map of the road 3, or a difference in the travel distance from the certain reference point on the road 3 may be calculated.

Specifically, when the limit of the power consumption is enhanced, a speed of the trolley-type electric vehicle in which the limit is enhanced falls. Therefore, the operation management device 1 creates vehicle control information in which the limit is more enhanced for a vehicle having a larger inter-vehicle distance with the succeeding vehicle or the limit is more enhanced for a vehicle having a smaller inter-vehicle distance with the preceding vehicle. For example, when an output value of the renewable energy power generation system 8 decreases by 10,000 kW from a previously reported value in a situation in which 1000 trolley-type electric vehicles travel on the road 3, 500 trolley electric vehicles in the 1000 trolley-type electric vehicles have an inter-vehicle distance of 200 m or more with the succeeding vehicle, and the remaining 500 vehicles have an inter-vehicle distance of less than 200 m with the succeeding vehicle and in a situation in which the operation management device 1 issues an instruction to limit the power consumption to 125 kW to the 1000 trolley electric vehicles, the operation management device 1 transmits vehicle control information of a content for enhancing the limit of the power consumption to 105 kW to the 500 trolley-type electric vehicles having an inter-vehicle distance of 200 m or more with the succeeding vehicle.

When the limit of the power consumption is relaxed, the speed of the trolley-type electric vehicle in which the limit is relaxed increases. Therefore, the operation management device 1 creates vehicle control information of in which the limit is more relaxed for a vehicle having a larger inter-vehicle distance with the preceding vehicle or relaxing the limit is more relaxed for a vehicle having a smaller inter-vehicle distance with the succeeding vehicle. For example, when the output value of the renewable energy power generation system 8 increases by 10,000 kW from the previously reported value in a situation in which 1000 trolley electric vehicles are traveling on the road 3, 500 trolley electric vehicles in the 1000 trolley-type electric vehicles have an inter-vehicle distance of 200 m or more with the preceding vehicle, and the remaining 500 vehicles have an inter-vehicle distance of less than 200 m with the preceding vehicle and in a situation in which the operation management device 1 issues the instruction to limit the power consumption to 125 kW to the 1000 trolley-type electric vehicles, the operation management device 1 transmits vehicle control information of a content for relaxing the limit of the power consumption to 145 kW to the 500 trolley-type electric vehicles having an inter-vehicle distance of 200 m or more with the preceding vehicle.

That is, by creating the vehicle control information 13 based on the position information 16 of each trolley-type electric vehicle 2 by the operation management device 1, it is possible to expect not only the effect described in the first embodiment, but also an effect of reducing the occurrence of an event in which the distance between the trolley-type electric vehicles becomes short and the succeeding vehicle is decelerated unnecessarily and preventing an increase in the power consumption per unit travel distance.

### [Third Embodiment]

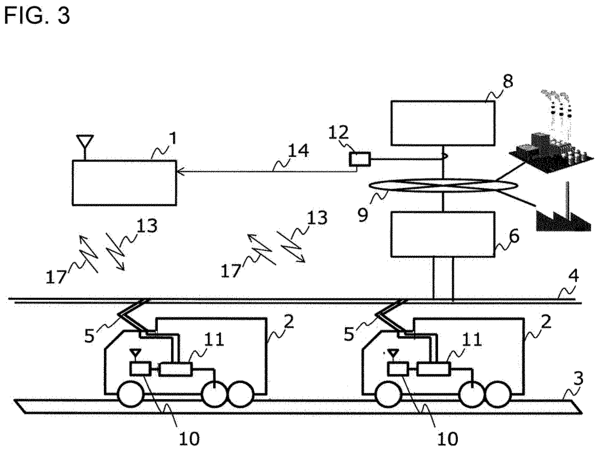

A third embodiment describes a method in which a vehicle-mounted device of a trolley-type electric vehicle reports demand power of the trolley-type electric vehicle to an operation management device, and the operation management device creates vehicle control information in consideration of the demand power of each trolley-type electric vehicle. FIG. 3 shows a configuration example of a power supply and demand adjustment system according to the third embodiment. Differences from the first embodiment are that the drive device 11 of the trolley-type electric vehicle 2 estimates demand power 17 and outputs the demand power 17 to the vehicle-mounted device 10 and that the vehicle-mounted device 10 reports this information to the operation management device 1. The method of estimating the demand power is not limited. A rated power consumption may be used, or the demand power may be estimated based on a vehicle speed, a depression amount of an accelerator, and the like.

The same mechanism as that according to the first embodiment is used for the mechanism in which, the operation management device 1 grasps the generated power 14 of the renewable energy power generation system 8, and changes power consumption of the trolley-type electric vehicle 2 traveling on the road 3 in accordance with a fluctuation of the generated power of the renewable energy power generation system 8 by creating the vehicle control information 13 for enhancing or relaxing limit of the power consumption of the trolley-type electric vehicle 2 traveling on the road 3 provided with the power supply overhead wire 4 corresponding to change in the generated power and by transmitting the vehicle control information 13 to the vehicle-mounted device 10.

A difference from the first embodiment is that the operation management device 1 creates the vehicle control information 13 in consideration of the demand power 17 of the trolley-type electric vehicle 2 reported from the vehicle-mounted device 10. Accordingly, the occurrence of an event in which power remains is reduced. Specifically, when the generated power 14 of the renewable energy power generation system 8 increases and the limit of the power consumption is relaxed, the operation management device 1 creates vehicle control information in which the limit is more relaxed for a vehicle in which a difference between the demand power and a limit value of the power consumption is larger.

Specifically, when an output value of the renewable energy power generation system 8 increases by 10,000 kW from a previously reported value in a situation in which 1000 trolley-type electric vehicles travel on the road 3, 500 trolley-type electric vehicles in the 1000 trolley-type electric vehicles have demand power of 120 kW, and the remaining 500 trolley-type electric vehicles have demand power of 150 kW and in a situation in which the operation management device 1 issues an instruction to limit the power consumption to 120 kW to the 1000 trolley-type electric vehicles, the operation management device 1 transmits vehicle control information of a content for relaxing the limit of the power consumption to 140 kW to the 500 trolley-type electric vehicles of the latter having the demand power of 150 kW.

When the generated power 14 of the renewable energy power generation system 8 decreases and the limit of the power consumption is enhanced, the travel performance of the vehicle deteriorates more as the difference between the demand power and the limit value of the power consumption is larger, and therefore, the operation management device 1 creates vehicle control information in which the limit is more enhanced for a vehicle having a lower demand power. Specifically, when the output value of the renewable energy power generation system 8 decreases by 10,000 kW from the previously reported value in a situation in which 1000 trolley-type electric vehicles travel on the road 3, 500 trolley-type electric vehicles in the 1000 trolley-type electric vehicles have a demand power of 120 kW, and the remaining 500 trolley-type electric vehicles have a demand power of 150 kW and in a situation in which the operation management device 1 issues the instruction to limit the power consumption to 120 kW to the 1000 trolley-type electric vehicles, the operation management device 1 transmits vehicle control information of a content for enhancing the limit of the power consumption to 100 kW to the 500 trolley-type electric vehicles of the former having a demand power of 120 kW.

That is, by creating the vehicle control information 13 based on the demand power 17 of each trolley-type electric vehicle 2 by the operation management device 1, it is possible to expect not only the effect described in the first embodiment, but also an effect of reducing the occurrence of the event in which the power remains and an event in which the vehicle travels with lowered travel performance.

### [Fourth Embodiment]

A fourth embodiment describes a method in which a vehicle-mounted device of a trolley-type electric vehicle reports information of a position, a destination point, and an arrival target time of the trolley-type electric vehicle to an operation management device, and the operation management device creates vehicle control information based on the information.

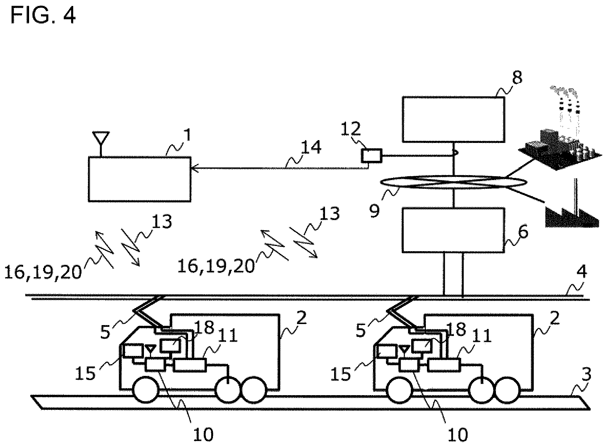

FIG. 4 shows a configuration example of a power supply and demand adjustment system according to the fourth embodiment. A difference from the first embodiment is that the vehicle-mounted device 10 of the trolley-type electric vehicle 2 is provided with the position recognition device 15 that measures a current position of the trolley-type electric vehicle 2 and a terminal 18 in which a destination point and an arrival target time are input by a driver, and reports the position information 16 of the trolley-type electric vehicle 2, information 19 of the destination point, and information 20 of the arrival target time to the operation management device 1. The method of measuring the position is not limited. A satellite positioning system may be used, or a travel distance from a reference point on the road 3 may be calculated based on the number of rotations of a wheel and a wheel diameter. An interface with a command member or another system may be prepared in the operation management device 1, and the information 19 of the destination point and the information 20 of the arrival target time may be input into the operation management device 1 not from the driver of the trolley-type electric vehicle 2 but from the command member or another system.

The same mechanism as that according to the first embodiment is used for the mechanism in which, the operation management device 1 grasps the generated power 14 of the renewable energy power generation system 8, and changes power consumption of the trolley-type electric vehicle 2 traveling on the road 3 in accordance with a fluctuation of the generated power of the renewable energy power generation system 8 by creating the vehicle control information 13 for enhancing or relaxing limit of the power consumption of the trolley-type electric vehicle 2 traveling on the road 3 provided with the power supply overhead wire 4 corresponding to change in the generated power and by transmitting the vehicle control information 13 to the vehicle-mounted device 10.

A difference from the first embodiment is that, when the operation management device 1 creates the vehicle control information 13, the position information 16 of the trolley-type electric vehicle 2, the information 19 of the destination point, and the information 20 of the arrival target time that are reported from the vehicle-mounted device 10 are used. Specifically, the operation management device 1 calculates a remaining distance to the destination point based on the position information 16 and the information 19 of the destination point that are reported from the vehicle-mounted device 10 of each trolley-type electric vehicle 2, calculates a remaining time from a current time and the information 20 of the arrival target time, and calculates a target speed of each trolley-type electric vehicle by dividing the former by the latter. A vehicle having a higher target speed exhibits a larger influence of the limit of the power consumption on a destination point arrival time, a larger risk of not being able to arrive at the destination point until the arrival target time, and a longer delay time when the vehicle arrives at the destination point.

Therefore, when the limit of the power consumption is relaxed, the operation management device 1 creates vehicle control information in which the limit is more relaxed for a vehicle having a higher target speed. For example, when an output value of the renewable energy power generation system 8 increases by 10,000 kW from a previously reported value in a situation in which 1000 trolley-type electric vehicles travel on the road 3, 500 trolley-type electric vehicles in the 1000 trolley-type electric vehicles have a target speed of 80 km/h or higher, and the remaining 500 trolley-type electric vehicles have a target speed of lower than 80 km/h and in a situation in which the operation management device 1 issues an instruction to limit the power consumption to 120 kW to the 1000 trolley-type electric vehicles, the operation management device 1 transmits vehicle control information of a content for relaxing the limit of the power consumption to 140 kW to the 500 trolley-type electric vehicles of the former having the target speed of 80 km/h or higher.

When the limit of the power consumption is enhanced, the operation management device 1 creates vehicle control information in which the limit is more enhanced for a vehicle having a lower target speed. For example, conversely, when the output value of the renewable energy power generation system 8 decreases by 10,000 kW from the previously reported value in the same situation as described above, the operation management device 1 transmits vehicle control information of a content for enhancing the limit of the power consumption to 100 kW to the 500 trolley-type electric vehicles of the latter having the target speed of lower than 80 km/h.

That is, by creating the vehicle control information 13 based on the position information 16 of the trolley-type electric vehicle 2, the information 19 of the destination point, and the information 20 of the arrival target time by the operation management device 1, it is possible to expect not only the effect described in the first embodiment, but also an effect of reducing the risk of not being able to arrive at the destination point until the arrival target time and reducing the delay time when the trolley-type electric vehicle 2 arrives at the destination point.

### [Fifth Embodiment]

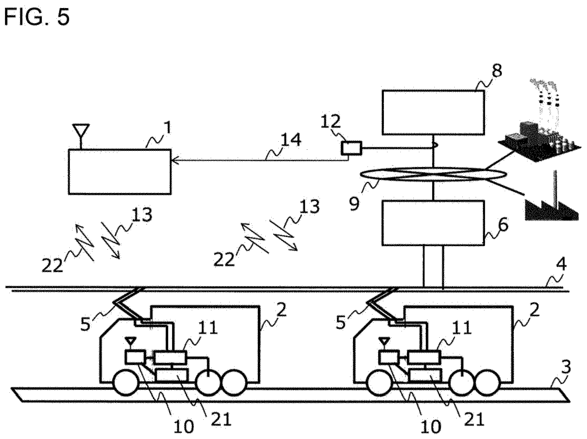

A fifth embodiment describes that a trolley-type electric vehicle is provided with a storage device, and a method in which a vehicle-mounted device reports a charging rate of the storage device to an operation management device and the operation management device creates vehicle control information in consideration of the charging rate of the storage device of each trolley-type electric vehicle. FIG. 5 shows a configuration example of a power supply and demand adjustment system according to the fifth embodiment. A difference from the first embodiment is that the trolley-type electric vehicle 2 is provided with a storage device 21, the storage device 21 outputs a charging rate 22 to the vehicle-mounted device 10, and the vehicle-mounted device 10 reports the information to the operation management device 1. When power consumption is limited to demand power or less, the drive device 11 can cause a vehicle to travel using power charged in the storage device 21.

The same mechanism as that according to the first embodiment is used for the mechanism in which, the operation management device 1 grasps the generated power 14 of the renewable energy power generation system 8, and changes power consumption of the trolley-type electric vehicle 2 traveling on the road 3 in accordance with a fluctuation of the generated power of the renewable energy power generation system 8 by creating the vehicle control information 13 for enhancing or relaxing limit of the power consumption of the trolley-type electric vehicle 2 traveling on the road 3 provided with the power supply overhead wire 4 corresponding to change in the generated power and by transmitting the vehicle control information 13 to the vehicle-mounted device 10.

A difference from the first embodiment is that, when the operation management device 1 creates the vehicle control information 13, the charging rate 22 of the storage device 21 of the trolley-type electric vehicle 2 reported from the vehicle-mounted device 10 is used. Specifically, a vehicle including a storage device having a lower charging rate exhibits a higher risk of lowering travel performance of the vehicle when the power consumption is limited to the demand power or lower. Therefore, the operation management device 1 more relaxes the limit for a vehicle including a storage device having a lower charging rate when the limit of the power consumption is relaxed, and more enhances the limit for a vehicle including a storage device having a higher charging rate when the limit is enhanced.

For example, when an output value of the renewable energy power generation system 8 increases by 10,000 kW from a previously reported value in a situation in which 1000 trolley-type electric vehicles travel on the road 3, 500 trolley-type electric vehicles in the 1000 trolley-type electric vehicles have a charging rate of the storage device of 50% or more, and the remaining 500 trolley-type electric vehicles have a charging rate of the storage device of less than 50% and in a situation in which the operation management device 1 issues an instruction to limit the power consumption to 120 kW to the 1000 trolley-type electric vehicles, the operation management device 1 transmits vehicle control information of a content for relaxing the limit of the power consumption to 140 kW to the 500 trolley-type electric vehicles of the latter having the charging rate of the storage device of less than 50%.

Conversely, when the output value of the renewable energy power generation system 8 decreases by 10,000 kW from the previously reported value in the same situation as described above, the operation management device 1 transmits vehicle control information of a content for enhancing the limit of the power consumption to 100 kW to the 500 trolley-type electric vehicles of the former having the charging rate of the storage device of 50% or more.

That is, by creating the vehicle control information 13 based on the charging rate 22 of the storage device 21 of the trolley-type electric vehicle 2 by the operation management device 1, it is possible to expect not only the effect described in the first embodiment, but also an effect of reducing the occurrence of an event in which the vehicle travels with lowered travel performance. The same effect can be expected using a remaining charge amount instead of the charging rate of the storage device. When a trolley-type electric vehicle that does not include the storage device is mixed, the vehicle may be handled as having a charging rate of 0% and a remaining charge amount of 0.

The invention is not limited to the embodiments described above and includes various modifications. For example, the above-mentioned embodiments are described in detail for easy understanding of the invention, and the invention is not necessarily limited to those including all the configurations described above. A part of a configuration according to a certain embodiment can be replaced with a configuration according to another embodiment and the configuration according to another embodiment can be added to the configuration according to the certain embodiment. A part of the configuration according to each embodiment may be added to, deleted from, or replaced with another configuration.

### Reference Sign List

- 1: operation management device
- 2: trolley-type electric vehicle
- 3: road
- 4: power supply overhead wire
- 5: current collecting device
- 6: power supply device
- 8: renewable energy power generation system
- 9: power system
- 10: vehicle-mounted device
- 11: drive device
- 12: power meter
- 13: vehicle control information
- 14: generated power
- 15: position recognition device
- 16: position information
- 17: demand power
- 18: terminal
- 19: information of destination point
- 20: information of arrival target time
- 21: storage device
- 22: charging rate

## Claims

1. A power supply and demand adjustment system configured to adjust a power supply and demand balance of a power system connected with a renewable energy power generation system, the power supply and demand adjustment system comprising:
an operation management device configured to transmit vehicle control information to a vehicle traveling on a route connected to the power system.

2. The power supply and demand adjustment system according to claim 1, wherein
the route connected to the power system is a road provided with a power supply overhead wire, and the vehicle is a trolley-type electric vehicle that travels by receiving power supplied from the overhead wire.

3. The power supply and demand adjustment system according to claim 1, wherein
the vehicle control information is information of limiting power consumption of the vehicle.

4. The power supply and demand adjustment system according to claim 1, wherein
the vehicle control information is information of an amount of power supplied to the vehicle.

5. The power supply and demand adjustment system according to claim 1, wherein
the operation management device creates the vehicle control information based on a position of the vehicle.

6. The power supply and demand adjustment system according to claim 1, wherein
the operation management device creates the vehicle control information based on demand power of the vehicle.

7. The power supply and demand adjustment system according to claim 1, wherein
the operation management device creates the vehicle control information based on a position, a target point, and an arrival target time of the vehicle.

8. The power supply and demand adjustment system according to claim 1, wherein
a storage device is mounted on the vehicle, and
the operation management device creates the vehicle control information based on a charging rate of the storage device.

9. A vehicle-mounted device mounted on a vehicle that is capable of being connected to the power supply and demand adjustment system according to claim 1, wherein
a drive device of the vehicle is controlled based on the vehicle control information transmitted from the operation management device.

10. The vehicle-mounted device according to claim 9, wherein
a position of the vehicle is reported to the operation management device.

11. The vehicle-mounted device according to claim 9, wherein
demand power of the vehicle is reported to the operation management device.

12. The vehicle-mounted device according to claim 9, wherein
a position, a target point, and an arrival target time of the vehicle are reported to the operation management device.

13. The vehicle-mounted device according to claim 9, wherein
a storage device is mounted on the vehicle, and
a charging rate of the storage device is reported to the operation management device.

14. A power supply and demand adjustment method for adjusting a power supply and demand balance of a power system connected with a renewable energy power generation system, the power supply and demand adjustment method comprising
adjusting power consumption by controlling operation of a vehicle traveling on a route connected to the power system.
